# EUROPÄISCHE PATENTSCHRIFT

(11) **EP 1 939 793 B1**
(45) Veröffentlichungstag und Bekanntmachung des Hinweises auf die Patenterteilung: **25.01.2012**
(21) Anmeldenummer: 07024725.9
(22) Anmeldetag: 20.12.2007
(51) Int. Cl.: G06K 19/077, H01Q 1/00, H01Q 9/26, H01Q 13/10

(54) **Passives RF-Detektierplättchen**
Passive RF detection plate
Petite plaquette de détection passive RF

(30) Priorität: 27.12.2006 DE 102006062308
(43) Veröffentlichungstag der Anmeldung: 02.07.2008
(73) Patentinhaber: ASTRA Gesellschaft für Asset Management mbH & Co. KG, 30890 Barsinghausen (DE)
(72) Erfinder: Stobbe, Anatoli, 30890 Barsinghausen (DE); Mussmann, Stefan, 30966 Hemmingen (DE); Höfinghoff, Jan-Florian, 30419 Hannover (DE)
(74) Vertreter: Patentanwälte Thömen & Körner

(56) Entgegenhaltungen:
- WO-A-01/37215
- US-A1- 2003 112 192
- US-A1- 2005 093 677
- US-A1- 2005 134 460
- US-A1- 2007 017 986
- US-B1- 6 378 774

## Beschreibung

Die Erfindung betrifft ein passives Detektierplättchen nach dem Oberbegriff des Anspruchs 1.

Als passives Detektierplättchen bezeichnet man einen Datenträger, der berührungslos von einem Lesegerät gelesen und gegebenenfalls auch beschrieben werden kann und der für den Betrieb seines Chips die Energie berührungslos vom Lesegerät erhält. Sowohl die Datenübertragung als auch die Energieübertragung erfolgen durch ein elektromagnetisches Feld.

Es sind Chips für den UHF- und SHF-Bereich bekannt, die mit einer Dipolantenne gekoppelt werden und von einem Lesegerät im UHF- oder SHF-Bereich über eine Entfernung über mehrere Meter gelesen werden können. Die Abmessungen bekannter Chips für den UHF- und SHF-Bereich liegen im Millimeterbereich. Die Abmessungen bekannter Detektierplättchen aus Chips und Dipolantennen liegen im Zentimeterbereich.

Passive Detektierplättchen der genannten Ausgestaltung werden vorzugsweise im Logistikbereich eingesetzt, um einzelne Waren, Verpackungen mit mehreren Wareneinheiten oder auch Paletten zum Transport einzelner Waren oder verpackter Waren zu identifizieren.

Solange die passiven Detektierplättchen auf einem elektrisch nicht leitenden Körper angeordnet sind und darüber hinaus sich auch nicht in der Nähe von elektrisch leitenden Körpern befinden oder durch diese abgeschirmt sind, ist ein Lesen über Entfernungen von mehreren Metern möglich. Elektrisch leitfähige Gegenstände, insbesondere metallische Gegenstände in unmittelbarer Nähe des passiven Detektierplättchens reduzieren die Reichweite jedoch erheblich oder führen sogar zu einem gänzlichen Versagen, wenn das passive Detektierplättchen direkt auf der metallischen Oberfläche angeordnet ist.

Aus der US 2005/093 677, der US 2005/134 460 und der US 2003/112 192 sind RFID-Transponder mit Chip und Schlitzantenne bekannt. Dabei ist ein mit dem Chip verbundenes Koppelelement galvanisch oder kapazitiv mit der Schlitzantenne gekoppelt. Anspruch 1 ist gegen diesen Stand der Technik abgegrenzt.

Beide Varianten sind störanfällig, und zwar eine galvanische Kopplung bei mechanischen Beanspruchungen oder Korrosion und eine kapazitiven Kopplung bei Annäherung elektrisch leitfähiger Objekte.

Die US 6,378,774 B1 offenbart eine Chipkarte mit induktiver Kopplung zwischen Chipmodul und Antennenschleife.

Der Erfindung liegt die Aufgabe zugrunde, ein passives Detektierplättchen zu schaffen, welches zur Identifizierung elektrisch leitfähiger Gegenstände geeignet und wenig störanfällig ist.

Dieser Aufgabe wird durch die Merkmale des Anspruchs 1 gelöst.

Weiterbildungen und vorteilhafte Ausgestaltungen ergeben sich aus den Unteransprüchen.

Als Chipmodul wird die Kombination eines Chips mit einem Koppelelement bezeichnet. Als Chip wird ein integrierter Schaltkreis bezeichnet, der die Komponenten Datensender, Datenempfänger, Energieempfänger, Controller mit Steuerprogramm und einem nichtflüchtigen Speicher für speicherbare Daten umfasst.

Bei der erfindungsgemäßen Lösung wird ein elektrisch leitfähiger Körper direkt als Bestandteil einer Antenne des Detektierplättchens genutzt, so dass das Detektierplättchen integraler Bestandteil des elektrisch leitfähigen Körpers wird. Die entsprechende Antenne wird dabei aus einer Öffnung gebildet, die sich in dem elektrisch leitfähigen Körper befindet und deren geometrische Abmessungen auf eine Sende- und Empfangsfrequenz des Chipmoduls und des Lesegerätes abgestimmt sind. Ein Koppelelement zwischen dem Chip und der Öffnung überträgt elektromagnetische Energie zwischen der Antenne und den Anschlüssen des Chips und führt gleichzeitig eine Impedanztransformation aus.

Das Koppelelement ist als induktives Koppelelement, nämlich als Spule ausgebildet.

Diese Art von Koppelelement ermöglicht eine nicht galvanische Ankopplung des Chips an die Antenne, so dass keine störanfällige Kontaktierung mit dem elektrisch leitfähigen Körper nötig ist.

Die Öffnung kann vollständig vom elektrisch leitfähigen Körper umschlossen oder einseitig offen sein.

Eine Öffnung, die vollständig vom elektrisch leitfähigen Körper umschlossen ist, lässt sich durch Anpassung ihrer geometrischen Abmessungen auf die halbe oder ein geradzahliges Vielfaches der halben Wellenlänge der Sende- und Empfangsfrequenz abstimmen.

Eine Öffnung, die nicht vollständig vom elektrisch leitfähigen Körper umschlossen ist, sondern einseitig offen ist, lässt sich durch Anpassung ihrer geometrischen Abmessungen auf ein Viertel oder ein ungeradzahliges Vielfaches eines Viertels der Wellenlänge der Sende- und Empfangsfrequenz anpassen.

Vorzugsweise weist die Öffnung eine gestreckte geometrische Gestalt auf.

Dadurch ist eine einfachere Berechnung der geometrischen Abmessungen möglich und es lassen sich einfacher geometrische Orte längs der Öffnung ermitteln, deren Impedanz der über das Koppelelement transformierten Eingangs- und Ausgangsimpedanz des Chips entspricht.

Weiterhin kann die geometrische Form der Öffnung einen mäanderförmigen Verlauf aufweisen.

Dadurch lässt sich die Gesamtlänge der Öffnung verringern, um eine Abstimmung auf eine niedrigere Resonanzfrequenz der Antenne zu erzielen.

In der Öffnung kann ein die Öffnung ganz oder teilweise ausfüllendes, elektrisch nicht leitendes Material angeordnet sein. Hierbei handelt es sich vorzugsweise um ein dielektrisches Material, welches auch für UHF und SHF geeignet sein muss.

Dadurch können bei gleicher Resonanzfrequenz die geometrischen Abmessungen der Öffnung reduziert werden, zum anderen kann so die Öffnung im elektrisch leitfähigen Körper wieder geschlossen werden, um die Öffnung zum Beispiel wieder gas- und flüssigkeitsdicht auszuführen.

Vorzugsweise ist das Koppelelement direkt mit Anschlüssen des Chips verbunden und der Chip und Koppelelement sind gemeinsam an oder in der Öffnung angeordnet.

Dies hat den Vorteil, dass einmal eine enge elektrische Kopplung zwischen der Antenne und dem Chip über das Koppelelement stattfindet und zum anderen, dass keine Kabelverbindungen nötig sind. Zudem kann der Chip mit dem Koppelelement auch unauffällig und damit sabotagesicher mit der Antenne verbunden werden.

Auch eine Integration in die Öffnung ist möglich. Wenn die Öffnung dann noch zusätzlich durch ein elektrisch nicht leitfähiges Material verschlossen wird, ist das Koppelelement mit dem Chip völlig in die Öffnung integriert und damit nicht mehr zerstörungsfrei entfernbar oder austauschbar.

Vorzugsweise ist das Koppelelement an einem Ort der Öffnung angeordnet, dessen Impedanz mit der vom Koppelelement transformierten Impedanz an den Anschlüssen des Chips die größte Übereinstimmung besitzt. Dadurch herrscht optimale Anpassung bei geringem Stehwellenverhältnis mit der bestmöglichen Energieübertragung und Reichweite.

Bei einem Anwendungsfall kann die Öffnung in einer metallischen Gasflaschenkappe angeordnet sein. Dadurch ist eine elektronische Identifizierung von Gasflaschen möglich. Dabei sitzt das Chipmodul innen im geschützten Bereich der Gasflaschenkappe.

Die Öffnung kann in einem aus Metall bestehen Kraftfahrzeugkennzeichen angeordnet sein. Dadurch wird die Fälschungssicherheit von Kennzeichen erhöht, indem neben einer optischen Überprüfung auch eine elektronische Überprüfung durchgeführt werden kann.

Weiterhin kann die Öffnung in einem metallischen Rahmen- oder Karosserieteil eines Kraftfahrzeugs angeordnet sein.

Auch hierdurch kann neben einer optischen Überprüfung zum Beispiel einer Fahrgestellnummer auch eine elektronische Überprüfung durchgeführt werden.

Nachfolgend wird die Erfindung anhand von Ausführungsbeispielen erläutert, die in der Zeichnung dargestellt sind.

In der Zeichnung zeigen:
Fig. 1 ein passives Detektierplättchen, bei dem die Antenne durch eine Öffnung in einem Metallblech gebildet ist und das Koppelelement ein induktives Koppelelement ist,
Fig. 2 ein passives Detektierplättchen in Kombination mit einer Gasflaschenkappe,
Fig. 3 ein passives Detektierplättchen in Kombination mit einem Kraftfahrzeugkennzeichens und
Fig. 4 ein passives Detektierplättchen in Kombination mit einem Fahrzeugrahmen.

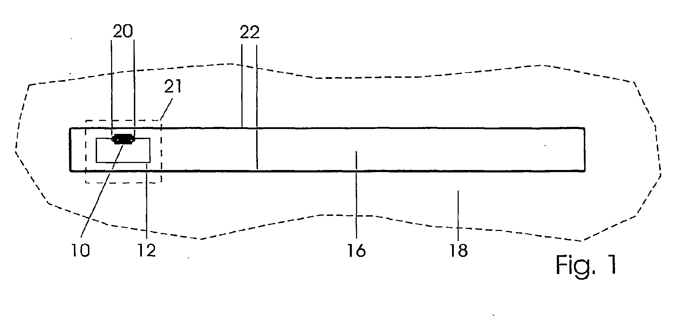

Das in Fig. 1 dargestellte passive Detektierplättchen umfasst einen Chip 10, ein Koppelelement und eine Antenne, die durch eine Öffnung 16 in einem Metallblech 18 gebildet ist. Die Öffnung hat eine rechteckige Gestalt. Ihre geometrischen Abmessungen hinsichtlich der Länge und Breite sind auf die halbe Wellenlänge der Sende- und Empfangsfrequenz des Chipmoduls 21 und eines hier nicht dargestellten Lesegerätes abgestimmt. In Fig. 1 ist ein induktives Koppelelement als Spule 12 ausgebildet. Die Spule 12 ist unmittelbar an Anschlüsse 20 des Chips 10 angeschlossen. Die Form der Spule 12 ist rechteckig, rund oder oval gestaltet und der Abstand zwischen den parallel zu den Längskanten 22 der Öffnung 16 verlaufenden Bereiche der Spule 12 entspricht etwa dem Abstand der Längskanten 22 der Öffnung 16.

Das Chipmodul 21 mit der Spule 12 und dem Chip 10 kann zum Beispiel auf einer Folie vorgefertigt sein und kann dann durch Aufkleben der Folie über die Öffnung 16 auf das Metallblech 18 mit der Antenne gekoppelt werden. Eine galvanische Verbindung ist nicht nötig.

Alternativ ist es auch möglich, das Chipmodul 21 mit der Spule 12 und dem Chip 10 in der Öffnung 16 anzuordnen und mit einer Vergussmasse aus einem elektrisch nichtleitenden Material zu fixieren.

Um optimale Anpassung zwischen Chipmodul 21 und Öffnung 16 bei geringem Stehwellenverhältnis und der bestmöglichen Energieübertragung und Reichweite zu erhalten, wird der Chip 10 gemeinsam mit dem Koppelelement an einem Ort der Öffnung 16 angeordnet, deren Impedanz mit der vom Koppelelement transformierten Impedanz an den Anschlüssen 20 des Chips 10 die größte Übereinstimmung besitzt.

In Fig. 1 ist die transformierte Impedanz zwischen den Anschlüssen 20 des Chips 10 niedrig. Ein geeigneter Ort der Öffnung 16 für die Platzierung des Chipmoduls 21 mit der Spule 12 und dem Chip 10 ist einer der Endbereiche der Öffnung 16.

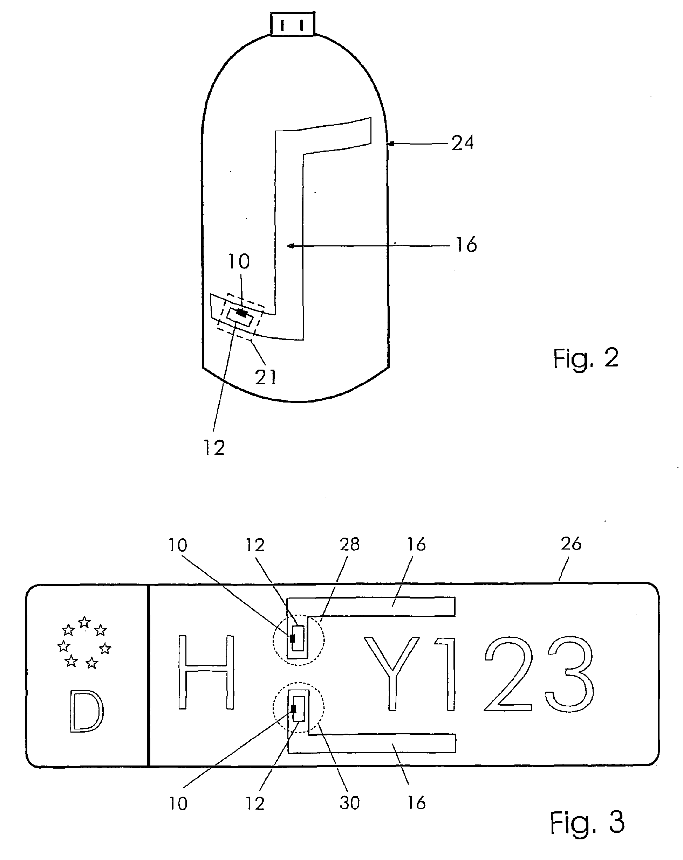

Fig. 2 zeigt ein passives Detektierplättchen, bei dem die Antenne Bestandteil einer Gasflaschenkappe 24 ist. In dem zylindrischen Teil der Gasflaschenkappe 24 befindet sich eine Öffnung 16, die z-förmig verläuft, bei geringer Kappenhöhe ist auch ein mäanderförmiger Verlauf möglich. An einem Ende der Öffnung ist ein Chipmodul 21 mit einer Spule 12 und einem Chip 10 eingelassen oder von innen aufgeklebt. Das Chipmodul sitzt daher immer im geschützten Bereich der Gasflaschenkappe. Die Öffnung 16 kann nachträglich mit einen elektrisch nicht leitfähigen Material verfüllt werden, so dass keine Feuchtigkeit zum Ventil vordringen kann und die Öffnung 16 unauffällig ist. Durch den z-förmigen oder mäanderförmigen Verlauf lässt sich bei gleicher Resonanzfrequenz die über alles Länge der Öffnung 16 gegenüber einem rein geradlinigen Verlauf verkürzen. Dies ist vorteilhaft für die mechanische Stabilität der Gasflaschenkappe 24.

Fig. 3 zeigt ein passives Detektierplättchen, bei dem die Antenne Bestandteil eines Kraftfahrzeugkennzeichens 26 ist. In diesem Fall sind zwei Öffnungen 16, 16' in den Bereichen des Kraftfahrzeugkennzeichens 26 vorhanden, in die keine Buchstaben oder Zahlen geprägt werden. Die Resonanzfrequenzen der durch die Öffnungen 16, 16' zusammen mit dem Kennzeichenblech gebildeten Antennen bleiben so nach einem Prägevorgang erhalten.

An den Enden der zur Kennzeichenmitte abgewinkelten Bereiche sind zwei Plaketten 28, 30, zum Beispiel für das hintere Kraftfahrzeugkennzeichens 26 eine TÜV-Plakette 28 und eine Zulassungsplakette 30 oder für das vordere Kraftfahrzeugkennzeichens 26 eine ASU-Plakette 28 und eine Zulassungsplakette 30 befestigt. Diese Plaketten enthalten jeweils ein Chipmodul 21, 21' aus jeweils einem Chip 10, 10' und jeweils einer Spule 12, 12'. Durch Aufkleben der Plaketten 28, 30 werden die Spulen 12, 12' über den Öffnungen 16, 16' fixiert und so mit den Antennen gekoppelt. Ein Ablösen aufgeklebter Plaketten 28, 30 führt zur Zerstörung der integrierten Chipmodule 21, 21'. Alternativ können mehrere Plaketten 28, 30 mit Chipmodulen 21, 21'auch auf ein und derselben Öffnung 16 befestigt sein. Dies ermöglicht eine geringere mechanische Schwächung des Trägerbleches.

Um die Daten der Chips 10, 10' selektiv lesen zu können, wird ein Antikollisionsverfahren durchgeführt.

Kommt ein Lesegerät mit Richtantennen zum Einsatz, so können die Daten bzw. Plaketten auch über Entfernungen von mehreren Metern gelesen werden, so dass auch eine Überprüfung von Kraftfahrzeugen mit einem derartigen Kraftfahrzeugkennzeichen im fließenden Verkehr vorgenommen werden kann.

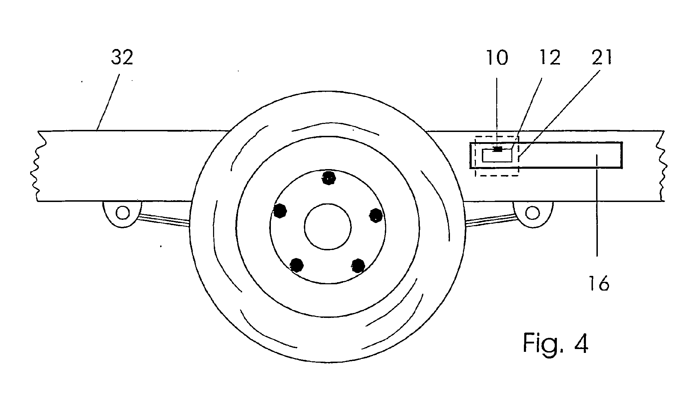

Fig. 4 zeigt ein passives Detektierplättchen, bei dem die Antenne Bestandteil eines Fahrzeugrahmens 32 ist. Hier befindet sich eine längliche Öffnung 16 im hinteren Teil des Fahrzeugrahmens 32. In der Öffnung 16 ist ein Chipmodul 21 mit einer Spule 12 und einem Chip 10 angeordnet. Die Öffnung 16 kann mit einer Vergussmasse verschlossen sein.

Im Chipmodul 21 können Daten gespeichert sein, die zum Beispiel der Fahrgestellnummer entsprechen. Manipulationen durch Heraustrennen der ins Fahrgestell mechanisch eingeprägten Nummer und Ersatz durch eine andere Fahrgestellnummer lassen sich durch berührungsloses Lesen der Daten des Chipmoduls 21 erkennen.

## Patentansprüche

1. Passives Detektierplättchen, bestehend aus einem Chip (10) und einer Antenne, die aus einem elektrisch leitfähigen Körper (18) mit einer Öffnung (16) in diesem Körper (18) besteht, wobei die geometrischen Abmessungen der Öffnung (16) auf Resonanz mit einer Sende- und Empfangsfrequenz eines mit dem passiven Detektierplättchen kommunizierenden Lesesystems abgestimmt sind, **dadurch gekennzeichnet, dass** der Chip (10) zusammen mit einem induktiven Koppelelement (12) ein Chipmodul (21) bildet und das induktive Koppelelement (12) in der Öffnung (16) des elektrisch leitfähigen Körpers (18) angeordnet ist oder an der Öffnung (16) des elektrisch leitfähigen Körpers (18) angeordnet ist, indem das auf einer Folie vorgefertigte Chipmodul (21) über die Öffnung (16) auf den elektrisch leitfähigen Körper (18) geklebt ist.

2. Passives Detektierplättchen nach Anspruch 1, **dadurch gekennzeichnet, dass** das induktive Koppelelement (12) als Spule ausgebildet ist.

3. Passives Detektierplättchen nach Anspruch 1 oder 2, **dadurch gekennzeichnet, dass** das Koppelelement (12) an einem Ort der Öffnung (16) angeordnet ist, an dem eine Impedanz herrscht, die mit der vom Koppelelement (12) transformierten Impedanz an den Anschlüssen (20) des Chips (10) die größte Übereinstimmung besitzt.

4. Passives Detektierplättchen nach einem der Ansprüche 1 bis 3, **dadurch gekennzeichnet, dass** die Öffnung (16) vollständig vom elektrisch leitfähigen Körper (18) umschlossen oder einseitig offen ist.

5. Passives Detektierplättchen nach einem der Ansprüche 1 oder 4, **dadurch gekennzeichnet, dass** die Öffnung (16) eine gestreckte geometrische Gestalt aufweist.

6. Passives Detektierplättchen nach einem der Ansprüche 1 bis 5, **dadurch gekennzeichnet, dass** die Öffnung (16) ein Länge-zu-Breite-Verhältnis größer 1 aufweist.

7. Passives Detektierplättchen nach einem der Ansprüche 1 bis 6, **dadurch gekennzeichnet, dass** die geometrische Form der Öffnung (16) einen mäanderförmigen oder z-förmigen Verlauf aufweist.

8. Passives Detektierplättchen nach einem der Ansprüche 1 bis 7, **dadurch gekennzeichnet, dass** in der Öffnung (16) ein die Öffnung (16) ganz oder teilweise ausfüllendes elektrisch nichtleitendes Material angeordnet ist.

9. Passives Detektierplättchen nach Anspruch 8, **dadurch gekennzeichnet, dass** das in der Öffnung (16) angeordnete elektrisch nichtleitende Material ein für den UHF oder SHF-Frequenzbereich geeignetes dielektrisches Material ist.

10. Passives Detektierplättchen nach einem der Ansprüche 1 bis 9, **dadurch gekennzeichnet, dass** das Koppelelement (12) direkt mit Anschlüssen (20) des Chips (10) verbunden ist und der Chip (10) und das Koppelelement (12) gemeinsam an oder in der Öffnung (16) angeordnet sind.

11. Passives Detektierplättchen nach einem der Ansprüche 1 bis 10 in Kombination mit einer metallischen Gasflaschenkappe (24), **dadurch gekennzeichnet, dass** die Öffnung (16) in der metallischen Gasflaschenkappe (24) angeordnet ist.

12. Passives Detektierplättchen nach einem der Ansprüche 1 bis 10 in Kombination mit einem metallischen Kraftfahrzeugkennzeichen (26), **dadurch gekennzeichnet, dass** die Öffnung (16) in dem metallischen Kraftfahrzeugkennzeichen (26) angeordnet ist.

13. Passives Detektierplättchen in Kombination mit einem metallischen Kraftfahrzeugkennzeichen (26) nach Anspruch 12, **dadurch gekennzeichnet, dass** das Chipmodul (21) integraler Bestandteil einer aufklebbaren aber nicht zerstörungsfrei ablösbaren Plakette (28; 30) ist.

14. Passives Detektierplättchen in Kombination mit einem metallischen Kraftfahrzeugkennzeichen (26) nach Anspruch 12 oder 13, **dadurch gekennzeichnet, dass** mehrere Plaketten (28, 30) oder Chipmodule (21) an oder in derselben Öffnung (16) angeordnet sind.

15. Passives Detektierplättchen nach einem der Ansprüche 1 bis 10 in Kombination mit einem metallischen Rahmen- oder Karosserieteil (32) eines Kraftfahrzeugs, **dadurch gekennzeichnet, dass** die Öffnung (16) in dem metallischen Rahmen- oder Karosserieteil (32) des Kraftfahrzeugs angeordnet ist.

## Claims

1. A passive detection plate,
consisting of a chip (10) and an antenna which consists of an electrically conductive body (18) with an opening (16) in this body (18),
wherein the geometric dimensions of the opening (16) are adapted for resonance with a transmitting and receiving frequency of a reading system which communicates with the passive detection plate,
**characterised in that**
the chip (10), together with an inductive coupling element (12), forms a chip module (21)
and the inductive coupling element (12) is arranged in the opening (16) of the electrically conductive body (18)
or is arranged at the opening (16) of the electrically conductive body (18) by the chip module (21) prefabricated on a film being stuck over the opening (16) onto the electrically conductive body (18).

2. The passive detection plate according to Claim 1, **characterised in that** the inductive coupling element (12) is configured as a coil.

3. The passive detection plate according to claim 1 or 2, **characterised in that** the coupling element (12) is arranged at a location of the opening (16), at which there is an impedance which corresponds closest to the impedance, transformed by the coupling element (12), at the connections (20) of the chip (10).

4. The passive detection plate according to one of claims 1 to 3, **characterised in that** the opening (16) is completely surrounded by the electrically conductive body (18) or is open at one side.

5. The passive detection plate according to one of claims 1 or 4, **characterised in that** the opening (16) has an elongated geometric form.

6. The passive detection plate according to one of claims 1 to 5, **characterised in that** the opening (16) has a length-to-width ratio greater than 1.

7. The passive detection plate according to one of claims 1 to 6, **characterised in that** the geometric form of the opening (16) has a meander-shaped or z-shaped course.

8. The passive detection plate according to one of claims 1 to 7, **characterised in that** an electrically non-conductive material entirely or partially filling the opening (16) is arranged in the opening (16).

9. The passive detection plate according to Claim 8, **characterised in that** the electrically non-conductive material arranged in the opening (16) is a dielectric material suitable for the UHF or SHF frequency range.

10. The passive detection plate according to one of claims 1 to 9, **characterised in that** the coupling element (12) is directly joined to connections (20) of the chip (10) and the chip (10) and the coupling element (12) are jointly arranged at or in the opening (16).

11. The passive detection plate according to one of claims 1 to 10 in combination with a metal gas bottle cap (24), **characterised in that** the opening (16) is arranged in the metal gas bottle cap (24).

12. The passive detection plate according to one of claims 1 to 10 in combination with a metal motor vehicle number plate (26), **characterised in that** the opening (16) is arranged in the metal motor vehicle number plate (26).

13. The passive detection plate in combination with a metal motor vehicle number plate (26) according to Claim 12, **characterised in that** the chip module (21) is an integral component of a sticker (28; 30) which can be stuck on but which cannot be peeled off without being destroyed.

14. The passive detection plate in combination with a metal motor vehicle number plate (26) according to Claim 12 or 13, **characterised in that** several stickers (28, 30) or chip modules (21) are arranged at or in the same opening (16).

15. The passive detection plate according to one of claims 1 to 10 in combination with a metal frame part (32) or body part (32) of a motor vehicle, **characterised in that** the opening (16) is arranged in the metal frame part (32) or body part (32) of the motor vehicle.

## Revendications

1. Plaquette de détection passive constituée par une puce (10) et une antenne constituée par un corps électriquement conducteur (18) avec une ouverture (16), les dimensions géométriques de l'ouverture (16) étant adaptées à entrer en résonance avec une fréquence d'émission et de réception d'un système de lecture communiquant avec la plaquette de détection passive, **caractérisée en ce que** la puce (10) forme un module de puce (21) avec un élément de couplage inductif (12) et que l'élément de couplage inductif (12) est disposé dans ou contre l'ouverture (16) du corps électriquement conducteur (18) en collant le module de puce préfabriqué sur une feuille (21) sur le corps électriquement conducteur (18) de façon à passer par-dessus l'ouverture (16).

2. Plaquette de détection passive suivant la revendication 1, **caractérisée en ce que** l'élément de couplage inductif (12) est conçu comme bobine.

3. Plaquette de détection passive suivant la revendication 1 ou 2, **caractérisée en ce que** l'élément de couplage (12) est disposé à un endroit de l'ouverture (16), auquel règne une impédance qui présente la plus grande concordance avec l'impédance transformée par l'élément de couplage (12) aux raccordements (20) de la puce (10).

4. Plaquette de détection passive suivant une des revendications 1 à 3, **caractérisée en ce que** l'ouverture (16) est entièrement entourée par le corps électriquement conducteur (18) ou ouverte sur un côté.

5. Plaquette de détection passive suivant une des revendications 1 à 4, **caractérisée en ce que** l'ouverture (16) présente une configuration géométrique allongée.

6. Plaquette de détection passive suivant une des revendications 1 à 5, **caractérisée en ce que** l'ouverture (16) présente un rapport longueur sur largeur supérieur à 1.

7. Plaquette de détection passive suivant une des revendications 1 à 6, **caractérisée en ce que** la forme géométrique de l'ouverture (16) présente une allure en forme de méandre ou de z.

8. Plaquette de détection passive suivant une des revendications 1 à 7, **caractérisée en ce qu'**un matériau électriquement non conducteur, remplissant entièrement ou partiellement l'ouverture (16), est disposé dans celle-ci.

9. Plaquette de détection passive suivant la revendication 8, **caractérisée en ce que** le matériau électriquement non conducteur, disposé dans l'ouverture (16), est un matériau diélectrique approprié à la gamme des fréquences UHF ou SHF.

10. Plaquette de détection passive suivant une des revendications 1 à 9, **caractérisée en ce que** l'élément de couplage (12) est relié directement à des raccordements (20) de la puce (10) et que la puce (10) et l'élément de couplage (12) sont disposés, ensemble, dans ou contre l'ouverture (16).

11. Plaquette de détection passive suivant une des revendications 1 à 10 combinée à un chapeau de bouteille de gaz métallique (24), **caractérisée en ce que** l'ouverture (16) est disposée dans le chapeau de bouteille de gaz métallique (24).

12. Plaquette de détection passive suivant une des revendications 1 à 10 combinée à une plaque métallique d'immatriculation de véhicule automobile (26), **caractérisée en ce que** l'ouverture (16) est disposée dans la plaque d'immatriculation métallique de véhicule automobile (26).

13. Plaquette de détection passive combinée à une plaque métallique d'immatriculation de véhicule automobile (26) suivant la revendication 12, **caractérisée en ce que** le module de puce (21) fait partie intégrante d'une plaquette (28, 30) applicable par collage mais non détachable sans destruction.

14. Plaquette de détection combinée à une plaque métallique d'immatriculation de véhicule automobile (26) suivant la revendication 12 ou 13, **caractérisée en ce que** plusieurs plaquettes (28, 30) ou modules de puce (21) sont disposés dans ou contre la même ouverture (16).

15. Plaquette de détection passive suivant une des revendications 1 à 10 combinée à une pièce métallique de châssis ou de carrosserie (32) d'un véhicule automobile, **caractérisée en ce que** l'ouverture (16) est disposée dans la pièce métallique de châssis ou de carrosserie du véhicule automobile.
